# EUROPÄISCHE PATENTANMELDUNG

(11) **EP 1 579 976 A1**
(43) Veröffentlichungstag der Anmeldung: **28.09.2005**
(21) Anmeldenummer: 04028976.1
(22) Anmeldetag: 07.12.2004
(51) Int. Cl.: B29C 47/28, B29C 47/70

(54) **Blaskopf mit Schmelzeverteilung**

(30) Priorität: 23.03.2004 DE 102004014096
(71) Anmelder: Kiefel Extrusion GmbH, 67547 Worms (DE)
(72) Erfinder: Hessenbruch, Rolf, 42855 Remscheid (DE)
(74) Vertreter: Zmyj, Erwin

(57) **Zusammenfassung**

Die Erfindung betrifft einen Ein- oder Mehrschichtblaskopf, bei dem die Schmelzeverteilung im wesentlichen über waagerechte Wendelverteiler (8) stattfindet. Dadurch werden die üblichen Toträume (5) unterhalb der sonst schrägen Wendeln vermieden, was zu besseren Fließbedingungen im Blaskopf führt und Stippenbildung durch lange Verweilzeiten vermeidet. Außerdem kann die Bauhöhe durch die kompakte Anordnung der Wendel reduziert werden.

## Beschreibung

Die Erfindung betrifft einen Ein- oder Mehrschichtblaskopf für Folien und andere Rundkörper, bei dem die Verteilung der Schmelze auf den Umfang nicht wie allgemein üblich, über am Umfang gleichmäßig angeordnete schräge Wendel erfolgt, sondern im wesentlichen über waagerecht angeordnete Wendel, die nur im Bereich der nächsten Zulaufbohrung um etwa die Höhe versetzt wird, die der Breite der Wendel und der Breite des Überstromspaltes entspricht. Bei den üblichen Blasköpfen wird die Schmelzeverteilung über schräg angeordnete Wendel durchgeführt. Durch diese schräge Anordnung ergibt sich unterhalb der Wendel ein Bereich, der sich mit Schmelze füllt. Der Raum ergibt sich dadurch, dass die den Raum bildenden Teile montiert oder demontiert werden müssen, und hierfür ein gewisses Spiel notwendig ist. Obwohl man bemüht ist, dieses Spiel klein zu halten, kann nicht vermieden werden, dass sich dieser Raum mit Schmelze füllt. Man hat nun festgestellt, dass die in diesen Raum eingedrungene Schmelze auch wieder ausgespült wird, wobei die Verweilzeit etwa einige Tage oder auch Wochen betragen kann. Dies führt aber zum thermischen Abbau der Schmelze und damit zu Stippenbildung, das heißt, es werden immer wieder verbrannte Kunststoffpartikel ausgespült. Dies führt zu einer deutlichen Qualitätseinbuße.

Zweck der vorliegenden Erfindung ist es, diesen Nachteil zu vermeiden. Dazu ist es notwendig, die Schmelze so zu führen, dass sich ein Raum mit langer Verweilzeit im Bereich der Wendel nicht bilden kann. Dies wird durch eine Wendelanordnung erreicht, die den Totraum vermeidet. Hierzu werden die Wendel im wesentlichen waagerecht angeordnet und so nah an die Dichtfläche gelegt, dass der gesamte Bereich immer optimal durchströmt und damit auch gespült wird. Anhand der beigefügten Zeichnungen wird die Erfindung näher erläutert.

Die Erfindung wird anhand von in den beigefügten Zeichnungen dargestellten Ausführungsbeispielen näher erläutert. Es zeigt:
- **Figur 1:**: schematisch einen Blaskopf mit schräger Wendelanordnung;
- **Figur 2:**: einen Schnitt durch einen solchen Blaskopf;
- **Figur 3:**: die Abwicklung dieser Wendel;
- **Figur 4:**: die Abwicklung der erfindungsgemäßen Wendelanordnung;
- **Figur 4.1:**: verschiedene erfindungsgemäße Wendelausführungen;
- **Figur 5:**: einen Schnitt durch einen Blaskopf im Bereich des Wendelbeginns;
- **Figur 6:**: einen anderen Schnitt durch einen Blaskopf im Bereich des Wendelbeginns; und
- **Figur 7:**: eine detaillierte Darstellung der Figur 6.

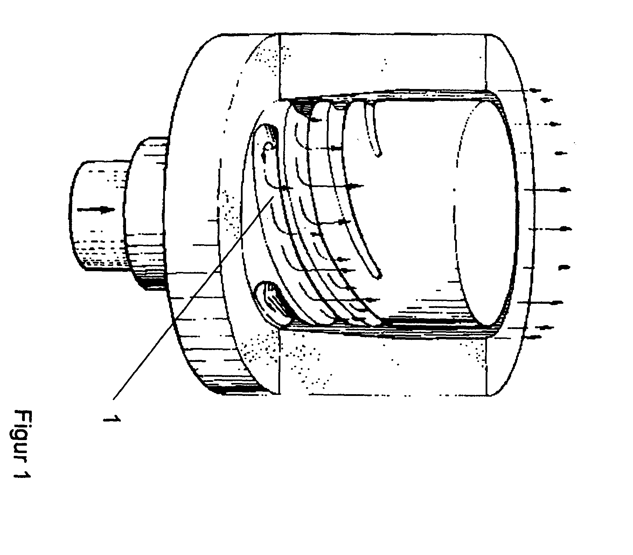

Figur 1 zeigt schematisch den Aufbau eines Blaskopfes mit schrägen Wendelverteilern 1. Die Schmelze kommt aus dem Zentrum, strömt in die Wendel und verteilt sich durch kontinuierliches Ausströmen aus den Wendeln 1 über den Überstromspalt bis zum Blaskopfaustritt.

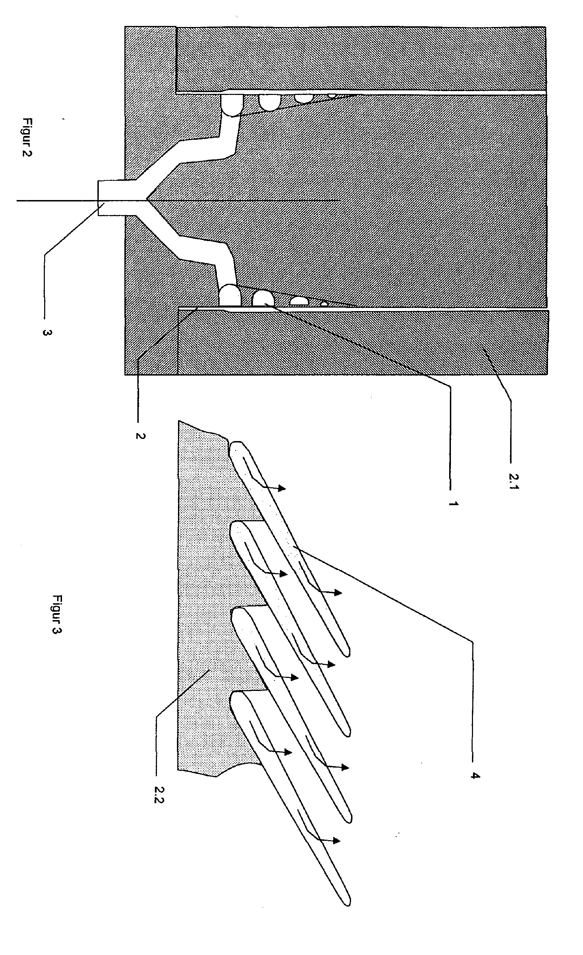

Figur 2 zeigt einen Schnitt durch einen solchen Blaskopf. Die Schmelze strömt aus der zentralen Zulaufbohrung 3 in die Wendel 1. Unterhalb der Wendel ist ein kleiner Spalt 2 dargestellt. Dieser Spalt 2 soll so klein wie möglich sein, um den Schmelzeeintritt in diesen Raum 2 so gering wie möglich zu halten. Dieser Spalt 2 ist notwendig, um den Außenring 2.1 montieren zu können.

Figur 3 zeigt die Abwicklung der Wendel 4 und des darunter liegenden Raumes 2.2, in den die Schmelze fließt. Dieser Raum 2.2 wird sehr schlecht gespült, da die Schmelze normalerweise nur in Richtung Austritt fließt. Es hat sich aber erwiesen, dass in diesem Raum 2.2 die Schmelze nach ihrem Hineinfließen auch langsam wieder herausgespült wird. Dieser Vorgang kann mehrere Tage dauern, die Schmelze baut in der Zwischenzeit ab und wird als verbrannte Stippen wieder herausgespült. Das kann bedeuten, dass kontinuierlich Stippen entstehen und herausgespült werden.

Die erfindungsgemäße Lösung sieht deshalb vor, diesen Bereich so klein wie möglich zu halten oder ganz zu vermeiden.

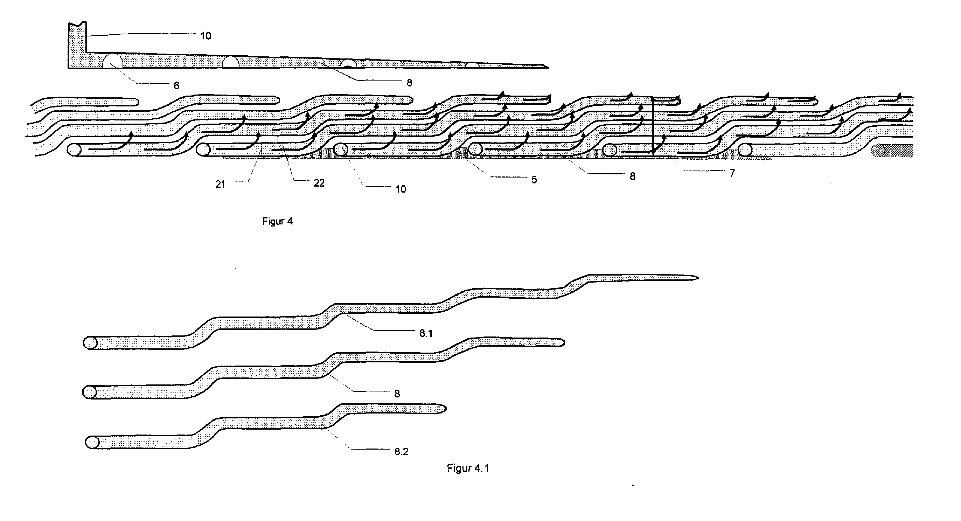

Figur 4 zeigt eine Abwicklung der erfindungsgemäßen Lösung. Die Wendel 8 sind waagerecht angebracht. Sie werden über Zulaufbohrung 10 mit Schmelze versorgt. Durch die waagerechte Anordnung wird der Raum 5 unterhalb der Wendel 8 auf ein sehr kleines Volumen gebracht. Die Wendel bleiben bis zur nächsten Zulaufbohrung 10 im untersten Bereich und werden dann von der nächsten Wendel abgelöst, wobei die vorherige Wendel einen Knick nach oben macht und dann parallel zur unteren Wendel verläuft, wobei die neue Ebene um die Wendelbreite 21 und den Überströmspalt 22 nach oben verschoben wird. Im dargestellten Fall ergibt sich so eine 4-fache Überlagerung. Trotz der 4-fachen Überlagerung ist die Gesamthöhe aller Wendel mit der Höhe 7 klein gegenüber der konventionellen Anordnung. Der Querschnitt 6 der einzelnen Wendel 8 nimmt über der Wendellänge ab, wobei das Maß der Querschnittsreduzierung von unterschiedlichen Faktoren abhängig sein kann.

Figur 4.1 zeigt andere Ausführungen der Wendel. Wendel 8.1 würde zu einer 5-fachen Überlagerung führen, Wendel 8.2 zu einer dreifachen.

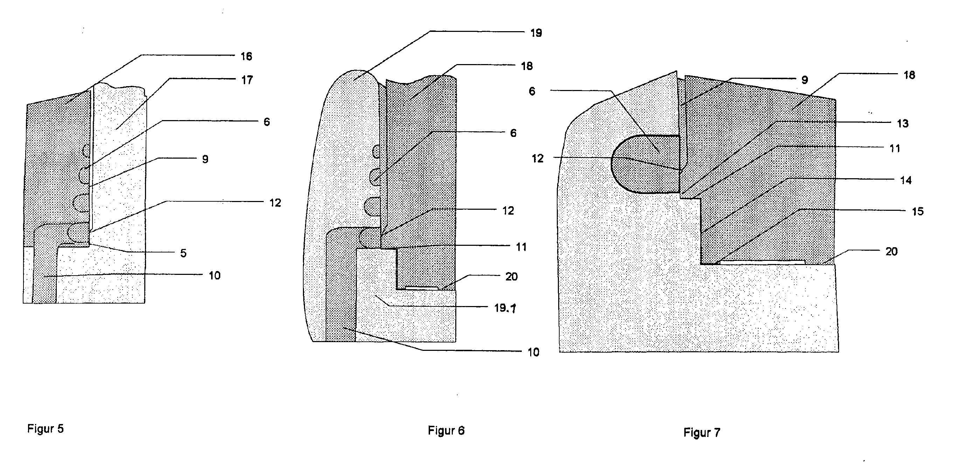

Figur 5 zeigt einen Blaskopfausschnitt im Bereich der Wendelanordnung. Die Innenpinole 16 ist zylindrisch und wird in den topfförmigen Außenmantel 17 eingesetzt. Aus fertigungstechnischen Gründen kann der Beginn der Wendel 6 deshalb sehr tief angesetzt werden, so dass der Totraum 5 sehr klein ist. Der Überströmspalt 9 beginnt im dargestellten Fall etwa auf halber Höhe 12 der unteren Wendelebene.

In Figur 6 besteht die Innenpinole aus einem zylindrischen Teil und einem Tragring 19.1. Diese Form erlaubt im Normalfall nicht die Fertigung der Wendel am tiefsten Punkt des Schmelzekanals. Um hier trotzdem die Wendel im tiefsten Punkt ansetzen zu können, wird eine kleine Stufe 11 vorgesehen, die gleichzeitig die Dichtfläche ist. Da sie nur einen wenig größeren Durchmesser hat als die zylindrische Wendelringfläche, ist die Fertigung der Wendel an dieser Stelle kein Problem. Die eigentliche Aufnahme des Außenmantels 18 erfolgt auf der Druckfläche 20 und der Dichtfläche 11, wobei die Druckfläche 20 in nicht angezogenem Zustand ein Hundertstel mm Spiel aufweist.

Figur 7 zeigt nochmals vergrößert die Details aus Figur 6. Die Dichtfläche 11 befindet sich unmittelbar an der unteren Ebene der Wendel 6. Dadurch ergibt sich ein sehr kleiner Totraum 13, der nur 1-2 mm hoch ist. Die Ringfläche 15 dient nicht als Dichtfläche, sondern als Stützfläche. Sie bildet mit Außenmantel 18 einen kleinen Luftspalt von wenigen Hundertstel mm, während die Ringfläche 20 als Stützfläche ausgebildet ist. So wird gesichert, dass der volle Anpressdruck auf die Druckfläche 15 wirkt. Der Überströmspalt 9 beginnt im dargestellten Fall an Punkt 12. Der Punkt 12 kann aber auch höher oder tiefer liegen.

## Patentansprüche

1. Blaskopf für die Extrusion von ein- oder mehrschichtigen Folien oder Rohren, bei dem die Schmelzeverteilung auf dem Umfang durch ein Wendelverteilersystem erfolgt, **dadurch gekennzeichnet, dass** die Wendeln (8) zur Vermeidung oder Reduzierung von Toträumen (5) im wesentlichen waagerecht angeordnet sind und nur im Bereich der nächsten Zulaufbohrung 10 um das Maß nach oben abgeknickt verlaufen, das sich aus der Breite der Wendel und des Überströmspaltes 9 ergibt.

2. Blaskopf nach Anspruch 1, **dadurch gekennzeichnet, dass** der Querschnitt der Wendel zum Auslaufende kontinuierlich im Querschnitt abnimmt.

3. Blaskopf nach Anspruch 1 oder 2, **dadurch gekennzeichnet, dass** die Überdeckung der Wendel immer um die Zahl 1 größer ist als die Anzahl der Knickpunkte.

4. Blaskopf nach einem der Ansprüche 1 bis 3, **dadurch gekennzeichnet, dass** die Unterkante des ersten Wendelsegmentes (8) unmittelbar an der Dichtfläche des entsprechenden Schmelzekanals angeordnet ist und **dadurch** der Raum (5) sehr klein wird.

5. Blaskopf nach einem der Ansprüche 1 bis 4, **dadurch gekennzeichnet, dass** die Unterkante des ersten Wendelsegmentes (8) auf der gleichen Ebene liegt wie die Dichtfläche (11).

6. Blaskopf nach einem der Ansprüche 1 bis 5, **dadurch gekennzeichnet, dass** unterhalb der Unterkante des ersten Wendelsegmentes ein kurzer senkrechter Abschnitt (13) angeordnet ist, der als Zentrierung wirkt und der unmittelbar an die Dichtfläche (11) angrenzt.
